# EUROPÄISCHE PATENTANMELDUNG

(11) **EP 2 775 219 A1**
(43) Veröffentlichungstag der Anmeldung: **10.09.2014**
(21) Anmeldenummer: 14157974.8
(22) Anmeldetag: 05.03.2014
(51) Int. Cl.: F24D 10/00, F24D 19/10

(54) **Anordnung für eine Heizungs- und Warmwasserbereitungsanlage in Gebäuden mit einem Nah- oder Fernwärmeanschluss**

(30) Priorität: 05.03.2013 DE 102013102146; 05.03.2013 DE 102013102147
(71) Anmelder: Petrick, Nico, 01099 Dresden (DE); Petrick, Robin, 02979 Elsterheide (DE)
(72) Erfinder: Petrick, Nico, 01099 Dresden (DE); Petrick, Robin, 02979 Elsterheide (DE)
(74) Vertreter: Weissfloh, Ingo

(57) **Zusammenfassung**

Die Aufgabe der Erfindung ist es, eine Anordnung eines Rücklaufes einer ersten Heizungsanlage bzw. der Primärseite eines Wärmetauschers für eine Verbraucheranwendung, wie für eine Warmwasserbereitung, hin zu mindestens einen zweiten Heizkreislauf oder Verbraucherkreislauf so zu realisieren, dass die vorhandene Wärmeenergie aus dem Rücklauf der Heizungsanlage bzw. des Wärmetauschers in einen weiteren Prozess, wie beispielsweise einer weiteren Heizungsanlage und/oder einem weiteren Wärmetauscher, beispielsweise als Vorwärmer bzw. ein Nachwärmer, integriert wird.

Bei der erfindungsgemäßen Anordnung für eine Heizungs- und Warmwasserbereitungsanlage in Gebäuden mit einem Nah- oder Fernwärmeanschluss mit einem Einspeisungsvorlauf (VL 0) und einem Einspeisungsrücklauf (RL 0) ist der Rücklauf der Primärseite eines Wärmetauschers (7) für eine Verbraucheranwendung als Verbraucherrücklauf (RL 1) in oder an einen Heizkreislauf (6) angeschlossen, geführt, eingebunden oder integriert und vom Heizkreislauf (6) ist ein resultierender Rücklauf (R RL) zum Einspeisungsrücklauf (RL 0) vorhanden.

## Beschreibung

Die Erfindung betrifft eine Anordnung für eine Heizungs- und Warmwasserbereitungsanlage in Gebäuden mit einem Nah- oder Fernwärmeanschluss, wobei mindestens ein Rücklauf mindestens einer Heizungsanlage oder Verbraucheranwendung, wie beispielsweise für eine Warmwasserbereitung, in mindestens einen anderen Heizkreislauf oder Verbraucherkreislauf eingespeist wird. Es ist somit auch vorgesehen, dass zwei Wärmetauscher in Reihe geschaltet sind.

Aus dem Stand der Technik sind einfache Wärmetauscheranordnungen für insbesondere Warmwasserbereitungen bekannt, bei welchen der Wärmetauscher auf der Sekundärseite die Warmwasserzuführung und die Zirkulationsleitung anbindet. Auf der Primärseite wird der Zufluss als Vorlauf und Rücklauf direkt der Fern- oder Nahwärmeeinspeisung zugeführt.

Der Nachteil des Standes der Technik ist dadurch gegeben, dass die Energie des Rücklaufes aus einem bestehenden Wärmetauscher zur Warmwasserbereitung über einen Einspeiser geleitet wird und nicht als zusätzliche Energiequelle noch nutzbar in eine schaltungstechnische Lösung integriert ist.

Aus dem Stand der Technik ist derzeit jedoch keine vergleichbare Anordnung einer Heizungs- und Warmwasserbereitungsanlage in Gebäuden mit einem Nah- oder Fernwärmeanschluss bekannt, bei welcher zwei Wärmetauscher so in Reihe geschaltet sind, dass sowohl primärseitig als auch sekundärseitig eine Kopplung stattfindet.

Der Nachteil des Standes der Technik ist dadurch gegeben, dass die Energie des Rücklaufes aus Warmwasserbereitungsanlage in Gebäuden mit einem bestehenden Wärmetauscher zur Warmwasserbereitung über einen Einspeiser geleitet wird und nicht als zusätzliche Energiequelle noch nutzbar in eine schaltungstechnische Lösung integriert ist.

Ziel der Erfindung ist es, eine Anordnung mindestens eines Rücklaufes mindestens einer Heizungsanlage oder Verbraucheranwendung, wie beispielsweise für eine Warmwasserbereitung, der in mindestens einen anderen Heizkreislauf oder Verbraucherkreislauf eingespeist wird, so zu realisieren, dass eine energiepolitische Effizient entsteht.

Die Aufgabe der Erfindung ist es, eine Anordnung eines Rücklaufes einer ersten Heizungsanlage bzw. der Primärseite eines Wärmetauschers für eine Verbraucheranwendung, wie für eine Warmwasserbereitung, hin zu mindestens einen zweiten Heizkreislauf oder Verbraucherkreislauf so zu realisieren, dass die vorhandene Wärmeenergie aus dem Rücklauf der Heizungsanlage bzw. des Wärmetauschers in einen weiteren Prozess, wie beispielsweise einer weiteren Heizungsanlage und/oder einem weiteren Wärmetauscher, beispielsweise als Vorwärmer bzw. als Nachwärmer, integriert wird.

Die Erfindung wird dadurch gelöst, dass der Patentanspruch 1 realisiert ist.

Dabei wird eine Anordnung eines Rücklaufes der Primärseite eines Wärmetauschers für eine Verbraucheranwendung, wie für eine Warmwasserbereitung, oder einem Rücklauf eines ersten Heizkreislaufes hin zu einem zweiten Heizkreislauf so entwickelt, dass der Rücklauf der Verbraucheranwendung auf der Primärseite eines Wärmetauschers oder der Rücklauf eines ersten Heizkreislaufes in einen Zirkulationsbypass zwischen einem Verteilpunkt im Rücklauf des zweiten oder anderen Heizkreislaufes und einem Zugang eines Dreiwegemischers im Vorlauf des zweiten oder anderen Heizkreislaufes eingespeist wird und in diesem Zirkulationsbypass einen Mischpunkt bildet.

Die Erfindung stellt sich vorteilhaft in einer Teilanwendung einer an sich bekannten Warmwasserbereitungsanlage in Kombination mit einer Heizungsanlage dar. Dabei wird, ausgehend von dem Einspeisepunkt der Fern- oder Nahwärme die Heizungsanlage vor den Wärmetauscher für die Warmwasserbereitung leitungsseitig angeordnet. Die Warmwasserbereitung findet über einen an sich bekannten Wärmetauscher, vorzugsweise einen Plattenwärmetauscher, statt. Die Warmwasserbereitung ist auf der Sekundärseite mit einem Wärmetauscher, vorzugsweise einem Plattenwärmetauscher gegeben, wobei die Temperatur des Warmwassers auf 60 °C erzeugt und über einen Verbrauch bzw. eine Zirkulationsleitung an den Rücklauf Sekundärseite in den Wärmetauscher eingespeist wird.

Der Rücklauf der Primärseite des Wärmetauschers der Warmwasserbereitung wird dann nicht wie gemäß dem Stand der Technik zum Einspeisepunkt der Fern- oder Nahwärme geleitet, sondern in den Kreislauf eines vorgeschalteten Heizungskreislaufes integriert. Vorteilhafterweise lässt es die Anordnung zu, dass der Rücklauf nicht jener eines Wärmetauschers zur Warmwasserbereitung ist. Es ist ebenso möglich, dass der Rücklauf ein Rücklauf eines Heizungskreislaufes ist. So ist es ebenfalls möglich, dass der aus Sicht der Einspeisung vorgeschaltete Kreislauf ein Primärkreis eines Wärmetauscherkreislaufes ist.

Dabei wird der Rücklauf der Primärseite des aus Sicht der Einspeisung nachgeschalteten Wärmetauschers bei der Warmwasserbereitung eines Verbrauchers hin zu einem Mischpunkt geführt, welcher in einem Zirkulationsbypass als Medienverbindung zwischen dem Rücklauf des vorgeschalteten Kreislaufes ausgehend von einem Verteilpunkt im Rücklauf des vorgeschalteten Kreislaufes und dem Eingang eines Dreiwegemischers, welcher in dem Vorlauf des vorgeschalteten Kreislaufes angeordnet ist, integriert ist.

Erfindungsgemäß wird somit der Rücklauf des vorgeschalteten Kreislaufes mit dem Rücklauf des primärseitigen Ausganges des nachgeschalteten Kreislaufes, wie dem Primärkreis eines Wärmetauschers der Warmwasserbereitung, in dem Mischpunkt gemischt und dem Zugang des Dreiwegemischers in dem Vorlauf des vorgeschalteten Kreislaufes energietechnisch zugeführt. Dieser aus Sicht der Einspeisung vorgeschaltete Kreislauf ist hierbei Heizkreislauf oder ein Primärkreis eines Wärmetauschers.

Somit wird erreicht, dass aus energietechnischer Sicht der Rücklauf aus einem Verbraucher, wie zum Beispiel der Warmwasserbereitung oder einer weiteren heizungs- bzw. energietechnischen Anlage mit höherem Niveau, in einen bestehenden Heizkreislauf integriert wird.

Der Vorteil ist dadurch gegeben, dass die vorhandene Energie aus dem Rücklauf eines entsprechenden Verbrauchers in einen bestehenden Heizungskreislauf eingebracht wird und somit der Rücklauf hin zum Einspeiser danach eine niedrigere Temperatur aufweist. Die entsprechende Ausregelung der einzelnen Temperaturdifferenzen ist in dieser erfindungsgemäßen Darstellung nicht beschrieben, da sie als Stand der Technik zu betrachten ist.

Die schaltungstechnische Lösung für die Einbindung des Rücklaufes eines Verbrauchers, wie zum Beispiel der Warmwasserbereitung oder einer anderen Energieeinspeisung mit höherem Niveau mit oder ohne einem Wärmetauscher oder Speicher, wird nun in bestehende an sich bekannte technische Lösungen für die Warmwasserbereitung zur Einspeisung, zum Beispiel über Fernwärmekompaktstationen oder Solaranlagen bzw. anderen Heizquellen wie Ölheizungen, eingebunden.
Dabei wird erreicht, dass eine maximale Energieauslastung des bestehenden Einspeisungsvorlaufes von 70 °C in Form der Warmwasserbereitung bzw. der Integration in den Heizkreislauf ausgeführt wird.

Vorteilhaft wird die Anordnung für eine Heizungs- und Warmwasserbereitungsanlage in Gebäuden mit einem Nah- oder Fernwärmeanschluss in Verbindung mit zwei Wärmetauschern so weiterentwickelt, dass dabei ein Vorwärmer für das Trinkwasser und ein Nachwärmer für die Warmwasserbereitung gegeben ist, wobei der Einspeisungsvorlauf einen Heizkreislauf und den Verbrauchervorlauf primärseitig an einen Wärmetauscher zur Warmwasserbereitung einspeist. Der primärseitige Verbraucherrücklauf des Wärmetauschers zur Warmwasserbereitung ist in den Heizkreislauf über den Mischpunkt im Zirkulationsbypass des Heizkreises integriert. So liegt der Rücklauf des Heizkreislaufs als Vorlauf primärseitig an einem zweiten Wärmetauscher über einen Verteilpunkt an. Der primärseitige Rücklauf dieses Wärmetauschers ist in den Einspeisungsrücklauf der Fern- oder Nachwärmeversorgung geführt. Sekundärseitig wird an diesen zweiten Wärmetauscher Trinkwasser als Zufluss zugeführt. Der sekundärseitige Abfluss des Wärmetauschers besitzt eine Verbindung zu einem Mischpunkt im sekundärseitigen Rücklauf des Zirkulationskreises des Wärmetauschers der Warmwasserbereitung.
Dabei ist eine Anlage gegeben, welche dazu dient, einen Heizkreislauf und eine sekundärseitige Warmwasserbereitung über einen Wärmetauscher für die Verbraucher zu realisieren, wobei die Restwärme im Einspeisungsrücklauf noch zusätzlich zur Vorwärmung genutzt und somit die Temperatur des Heizmediums noch weiter gesenkt wird. Bei der Warmwasserbereitung muss erreicht werden, dass eine konstante Einspeisungstemperatur von 60 °C ausgeführt wird. Der Sekundärkreis am Wärmetauscher zur Warmwasserbereitung stellt sich dadurch dar, dass durch den Verbrauch des Warmwassers und die bestehende Zirkulationsleitung ein Verbraucherrücklauf der Warmwasserbereitung gegeben ist. Wichtig ist dabei, dass der Vorlauf der Warmwasserbereitung auf 60 °C eingestellt wird. Am Anschluss der Fernwärmekompaktstation ist Fernwärme mit dem Einspeisungsvorlauf und dem Einspeisungsrücklauf gegeben. Über einen Verteilpunkt im Einspeisungsvorlauf wird, wie bereits beschrieben, eine Abzweigung hin zu einem Heizkreislauf ausgeführt. Dabei ist in dem Heizungsvorlauf ein Dreiwegemischer vorteilhafterweise in Form eines Dreiwegeventils integriert. Dieser Dreiwegemischer besteht aus einem Zugang, welcher über einen Zirkulationsbypass mit dem Verteilpunkt im Rücklauf des Heizungskreislaufes verbunden ist. Des Weiteren ist ein Abgang hin zu einer Pumpe und zum Heizungsvorlauf bis zur Heizungsanlage gegeben. Der Rücklauf des Heizungskreislaufes weist den Verteilpunkt auf. An diesem Verteilpunkt ist eine Medienverbindung als Zirkulationsbypass hin zum Zugang des Dreiwegemischers vorhanden. Innerhalb dieses Zirkulationsbypasses ist ein Mischpunkt gegeben, welcher in Verbindung mit dem Verbraucherrücklauf ausgeführt ist. Dieser Verbraucherrücklauf ist der primärseitige Ausgang des Wärmetauschers, vorzugsweise eines Plattenwärmetauschers. Dieser Wärmetauscher wird auch Nachwärmer genannt. Auf der Primärseite des Wärmetauschers ist als Eingang der Verbrauchervorlauf gegeben und als Ausgang der Verbraucherrücklauf. Auf der Sekundärseite sind der Ausgang als Warmwasserbereitungsvorlauf und der Eingang als Zirkulationsrücklauf vorhanden. In dem Strang des Zirkulationsrücklaufes ist eine Pumpe geschaltet.

Zwischen der Pumpe und dem Zirkulationsrücklauf am Wärmetauscher ist ein Mischpunkt gegeben. Dieser Mischpunkt wird eingespeist mit dem sekundärseitigen Ausgang des zweiten Wärmetauschers als Vorwärmer. Des Weiteren ist eine Zuführung Trinkwasser an der Sekundärseite des Wärmetauschers gewährleistet. Somit sind der erste Wärmetauscher der Warmwasserbereitung als Nachwärmer und der zweite Wärmetauscher der Trinkwasservorwärmung als Vorwärmer in Reihe geschaltet. Der zweite Wärmetauscher erwärmt als Vorwärmer zugeführtes Trinkwasser von ca. 10 °C. Im Verlauf des Stranges des resultierenden Rücklaufes des Heizungskreislaufes und des Verbraucherrücklaufs ist am zweiten Wärmetauscher ein weiterer Verteilpunkt gegeben. Dieser Verteilpunkt dient zur Weiterleitung des Heizmediums als Vorlauf an den primärseitigen Eingang des zweiten Wärmetauschers. Der Bereich des resultierenden Rücklaufes des Heizungskreislaufes und des Verbraucherrücklaufs parallel zum zweiten Wärmetauscher ist ein Lastentkopplungsbypass mit einem Rückschlagventil vor der Mischstelle mit dem Rücklauf des primärseitigen Ausganges des zweiten Wärmetauschers. Vorteilhaft ist der Lastentkopplungsbypass so dimensioniert, dass er den gesamten Rücklaufstrom, ausgehend vom Rücklauf des Heizungskreislauf und des Verbraucherrücklaufs, aufnehmen und durchleiten kann. Hierdurch ist es möglich den zweiten Wärmetauscher als Vorwärmer so zu dimensionieren, dass er seiner primären Aufgabe des Vorwärmens gerecht wird und somit baulich kleiner ausfallen kann, als würde der gesamte Rücklaufstrom regelmäßig durch ihn fließen müssen. Hierdurch ergeben sich erhebliche Kostenvorteile, da der einzusetzende vorwärmende Wärmetauscher einen einfachen und räumlich platzsparenden Aufbau besitzt. Der Rücklauf an der Primärseite des Wärmetauschers ist über eine Pumpe hin zu dem Mischpunkt geleitet. Dieser Mischpunkt setzt sich aus der eben dargestellten Zuführung aus der Pumpe und den Ausgang des Rückschlagventils in dem Strang des resultierenden Rücklaufes des Heizungskreislaufes und des Verbraucherrücklaufs zusammen. Über den Mischpunkt wird das Medium hin zu dem Einspeisungsrücklauf geführt.

Weiterhin wird beschreibend dargestellt, welche Temperaturverläufe in der Fernwärmekompaktstation stattfinden. Dabei werden der Einspeisungsvorlauf und der Einspeisungsrücklauf an ein Fernwärmenetz geschaltet.

Aus dem Heizkreislauf kommt ein Heizungsrücklauf mit einer Temperatur von 40 °C. Es ist ein Verteilpunkt gegeben, welcher in einer Medienverbindung steht mit dem Zugang des Dreiwegemischers im Heizungsvorlauf. Es wird eine Verteilung des Mediums in dem Rücklauf des Heizungskreislaufes über den Verteilpunkt durchgeführt. In der Medienverbindung zwischen dem Verteilpunkt und dem Zugang des Dreiwegemischers ist ein Mischpunkt vorhanden. An diesem Mischpunkt ist der Verbraucherrücklauf angeschlossen. Die Temperatur des beinhalteten Mediums beläuft sich auf ca. 58 °C. Über den Mischpunkt werden die jeweiligen Medien gemischt, und es entsteht eine Temperatur des Mediums von 49,7 °C am Zugang des Dreiwegemischers.

Der Verbraucherrücklauf findet primärseitig von einem Wärmetauscher statt und weist eine Temperatur von 58 °C auf. Ebenfalls an der Primärseite ist der Verbrauchervorlauf mit 70 °C anliegend. An der Sekundärseite des Wärmetauschers ist ein Medium von 60 °C im Vorlauf der Warmwasserbereitung gegeben. Wichtig ist dabei, dass diese Temperatur von 60 °C im Vorlauf der Warmwasserbereitung konstant gehalten wird.

Für die Nutzung der Warmwasserbereitung durch die jeweiligen Verbraucher ist eine Zirkulationsleitung hin zum ersten Wärmetauscher über einen Zirkulationsrücklauf mit einer zwischengeschalteten Pumpe vorhanden. Die Eingangstemperatur am Zirkulationsrücklauf beläuft sich auf ca. 55 °C. Der erste Wärmetauscher dient als Nachwärmer für die Warmwasserbereitung. In Reihe dazu ist ein weiterer, zweiter Wärmetauscher geschaltet. An der Sekundärseite wird Trinkwasser mit einer Temperatur von ca. 10 °C eingespeist. Der Ausgang der Sekundärseite des zweiten Wärmetauschers wird zum Mischpunkt vor dem Eintritt des Zirkulationsrücklaufes über die Pumpe in den ersten Wärmetauscher hergestellt. Über den zweiten Wärmetauscher als Vorwärmer wird das eingespeiste Trinkwasser mit 10 °C über den Wärmetauschprozess im zweiten Wärmetauscher vorgewärmt und über den Mischpunkt hin zum ersten Wärmetauscher als Eingangsgröße sekundärseitig zugeführt. An der Primärseite des zweiten Wärmetauschers ist ein Vorlauf mit einer Temperatur von ca. 40 °C gegeben. Dieser Vorlauf wird realisiert über einen Verteilpunkt, welcher aus der Zuführung des Mediums in dem Rücklauf des Heizungskreislaufes mit dem Verbraucherrücklauf resultiert. Der resultierende Rücklauf des beinhalteten Mediums des Heizungskreislaufes mit dem Verbraucherrücklauf wird über den Verteilpunkt weitergeführt über den Lastentkopplungsbypass an ein Rückschlagventil hin zu einem Mischpunkt. In diesem Mischpunkt fließt ein Medium, welches über den zweiten Wärmetauscher primärseitig und einer Pumpe eingeleitet wird. Dieses Medium hat ca. eine Temperatur von 20 °C. Es handelt sich dabei um den Rücklauf aus dem Wärmetauscher hin zum Mischpunkt. Vom Mischpunkt aus findet eine Zuführung in den Einspeisungsrücklauf statt. In dem beschriebenen Temperaturbeispiel wird in dem Einspeisungsrücklauf eine Temperatur von 29,3 °C erreicht.

Die Erfindung wird anhand von Ausführungsbeispielen näher beschrieben.

### Es zeigen die

Figur 1 eine Rücklaufanordnung,
Figur 2 eine kompakte Anlage,
Figur 3 eine kompakte Anlage mit Temperaturangaben und die
Figur 4 eine Rücklaufanordnung.

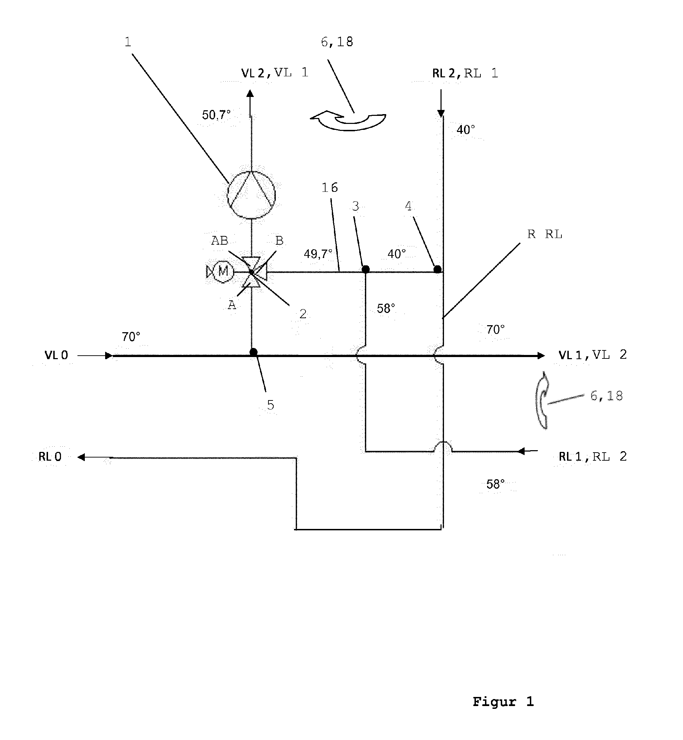

Aus der Figur 1 ist die erfindungsgemäße Einbindung des Verbraucherrücklaufes RL 1 in einen Mischpunkt 3 ersichtlich. Der Mischpunkt 3 wird gebildet aus einem Zufluss vom Verteilpunkt 4, welcher in den Rücklauf des Heizungskreislaufes RL 2 integriert und über einen Zirkulationsbypass 16 als Medienverbindung mit dem Zugang B eines Dreiwegemischers 2 verbunden ist. In dieser Medienverbindung wird der Mischpunkt 3 mit der Leitung des primärseitigen Verbraucherrücklaufs RL 1 des ersten Wärmetauschers 7 als Wärmetauscher der Warmwasserbereitung 7 gebildet.
Die angegebenen Temperaturen in der Figur 1 zeigen, wie aus energietechnischer Sicht die Zuordnung des Verbraucherrücklaufes RL 1 in den Heizkreislauf 6 stattfindet. Der Einspeisungsvorlauf VL 0 hat eine Temperatur von 70 °C und wird über den Verteilpunkt 5 hin zum Heizkreislauf 6 und zum Verbrauchervorlauf VL 1 geleitet. Nach dem Verteilpunkt 5 ist ein Dreiwegemischer 2, vorteilhafterweise ein Dreiwegeventil, gegeben. Dieses weist einen Zugang A, einen Zugang B und einen Abgang AB auf. Über den Zugang A hin zum Abgang AB des Dreiwegemischers 2 wird über eine Pumpe 1 der Heizkreislauf 6 mit dem Einspeisungsvorlauf VL 0 bedient. Dabei ist hinter der Pumpe 1 zum Beispiel eine Temperatur von 50,7 °C in dem Heizungsvorlauf VL 2 gegeben. Der Rücklauf des Heizungskreislaufes RL 2 weist eine Temperatur von 40 °C auf. In einem Verteilpunkt 4 wird dieses Rücklaufmedium aufgeteilt hin zum Einspeisungsrücklauf RL 0, welcher zunächst den resultierenden Rücklauf R RL bildet, und zum Zirkulationsbypass 16, der Verbindung zwischen Verteilpunkt 4 und dem Zugang B des Dreiwegemischers 2 im Heizungsvorlauf VL 2.

In dieser Medienverbindung ist der Mischpunkt 3 integriert, an welchem der Verbraucherrücklauf RL 1 angeschlossen ist. Der Verbraucherrücklauf RL 1 weist zum Beispiel eine Temperatur primärseitig eines vorhandenen Wärmetauschers von 58 °C auf. Diese 58 °C werden in dem Mischpunkt 3 mit der Temperatur des Mediums des Rücklaufes des Heizungskreislaufes RL 2 vermischt. Am Zugang B des Dreiwegemischers 2 ist somit eine Temperatur von 49,7 °C gegeben, welche mit dem Medium des Einspeisungsvorlauf VL 0 gemischt wird.

Es wird somit erreicht, dass über die Einspeisung in den Mischpunkt 3 des Verbraucherrücklaufes RL 1 die überschüssige Energie in den bestehenden Heizkreislauf 6 mit eingebracht wird. Der energietechnische Effekt besteht darin, dass an dem Einspeisungsrücklauf RL 0 eine wesentlich tiefere Temperatur als 58 °C, wie sie gemäß dem Stand der Technik bisher gegeben war, vorhanden ist.

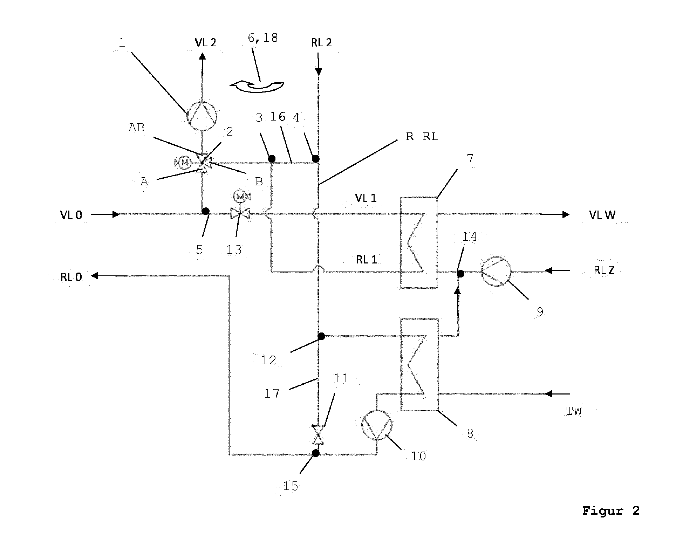

In der Figur 2 sind die Integration der erfinderischen Lösung aus der Figur 1 und die diesseitige Beschreibung verdeutlicht.

Gemäß Figur 1 kann der Verbrauchervorlauf VL 1 an eine Warmwasserbereitung mit vorhandener Zirkulationsleitung über einen Wärmetauscher 7 stattfinden. Es kann aber auch eine Anbindung des Verbrauchervorlaufes VL 1 an eine Heizung mit höherem Niveau erfolgen. In den praktischen Anwendungsfällen ist ein Wärmetauscher 7 mit der Primär- und der Sekundärseite geschaltet. Über der Primärseite wird dann der Verbraucherrücklauf RL 1 mit ca. 58 °C zum Mischpunkt 3 im Zirkulationsbypass 16 als Medienverbindung zwischen Verteilpunkt 4 und Zugang B des Dreiwegemischers 2 geführt.

Im Heizkreislauf 6 kann jedoch auch ein beliebiger geeigneter Wärmetauscher 18 mit primärseitigem Vorlauf und Rücklauf sowie mit sekundärseitigem Vorlauf und Rücklauf vorhanden sein, welcher eine entsprechende Verbraucheranwendung, sei es eine Warmwasserversorgung oder eine Heizung, sein kann, versorgt. Grundsätzlich lässt sich die erfindungsgemäße Anordnung, dass der Verbraucherrücklauf RL 1 eines Wärmetauschers 7 in einem Mischpunkt 3 mündet, welcher im Zirkulationsbypass 16 zwischen dem Verteilpunkt 4 im primärseitigem Rücklauf und dem Dreiwegemischer 2 im primärseitigem Vorlauf des Wärmetauschers 18 angeordnet ist, auch mit einem geeigneten Wärmetauscher 18 im Heizkreislauf 6 umsetzen. Hierbei sind entsprechende Dimensionierungen des Wärmetauschers 18 zu berücksichtigen, um die notwendige Durchflussmenge des Heizmediums zu gewährleisten.

Die Figur 2 zeigt eine schaltungstechnische Anordnung der erfinderischen Lösung. Dabei wird eine Fernwärmekompaktstation beschrieben, welche dazu dient, einen Heizkreislauf 6 und eine sekundärseitige Warmwasserbereitung über einen ersten Wärmetauscher 7 für Verbraucher zu realisieren. Bei der Warmwasserbereitung muss erreicht werden, dass eine konstante Einspeisungstemperatur von 60 °C ausgeführt wird. Der Sekundärkreis am ersten Wärmetauscher 7 stellt sich dadurch dar, dass durch den Verbrauch des Warmwassers und die bestehende Zirkulationsleitung ein Zirkulationsrücklauf RL Z gegeben ist. Wichtig ist dabei, dass der Vorlauf Warmwasserbereitung VL W auf 60 °C eingestellt wird. Am Anschluss der Fernwärmekompaktstation ist Fernwärme mit dem Einspeisungsvorlauf VL 0 und dem Einspeisungsrücklauf RL 0 gegeben.
Der Einspeisungsvorlauf VL 0 ist über den Verteilpunkt 5 weiterführend zu einem Durchlassventil 13 bis hin zum Verbrauchervorlauf VL 1 an den Wärmetauscher 7 geschaltet.
Über den Verteilpunkt 5 im Einspeisungsvorlauf VL 0 wird nun eine Abzweigung hin zu einem Heizkreislauf 6 ausgeführt. Dabei ist in dem Heizungsvorlauf VL 2 ein Dreiwegemischer 2 vorteilhafterweise in Form eines Dreiwegeventils integriert. Dieser Dreiwegemischer 2 besteht aus einem Zugang A, welcher mit dem Verteilpunkt 5 verbunden ist. Des Weiteren ist ein Abgang AB hin zu einer Pumpe 1 und zum Heizungsvorlauf VL 2 bis zur Heizungsanlage gegeben. Der Rücklauf des Heizungskreislaufes RL 2 weist einen Verteilpunkt 4 auf. An diesem Verteilpunkt 4 ist ein Zirkulationsbypass 16 als Medienverbindung hin zum Zugang B des Dreiwegemischers 2 vorhanden. Innerhalb dieses Zirkulationsbypasses 16 ist ein Mischpunkt 3 gegeben, welcher in Verbindung mit dem Verbraucherrücklauf RL 1 ausgeführt ist. Dieser Verbraucherrücklauf RL 1 ist der primärseitige Ausgang des ersten Wärmetauschers 7, vorzugsweise eines Plattenwärmetauschers. Dieser erste Wärmetauscher 7 wird auch Nachwärmer genannt. Auf der Primärseite des ersten Wärmetauschers 7 ist als Eingang der Verbrauchervorlauf VL 1 gegeben und als Ausgang der Verbraucherrücklauf RL 1. Auf der Sekundärseite sind der Ausgang des Warmwasserbereitungsvorlaufes VL W und der Eingang des Zirkulationsrücklauf RL Z vorhanden. In dem Strang des Zirkulationsrücklaufes RL Z ist eine Pumpe 9 geschaltet.

Zwischen der Pumpe 9 und dem Eingang des Zirkulationsrücklauf RL Z zum ersten Wärmetauscher 7 ist ein Mischpunkt 14 gegeben. Dieser Mischpunkt 14 ist mit dem Ausgang eines zweiten Wärmetauschers 8 auf der Sekundärseite verbunden und wird über diesen zweiten Wärmetauschers 8 bei Entnahme von Warmwasser gespeist. Des Weiteren ist eine Trinkwasserzuführung TW an der Sekundärseite des zweiten Wärmetauschers 8 gewährleistet. Somit sind der erste Wärmetauscher 7 und der zweite Wärmetauscher 8 in Reihe geschaltet. Der zweite Wärmetauscher 8 dient hierbei als Vorwärmer für das zugeführtes Trinkwasser von ca. 10 °C an der Sekundärseite des zweiten Wärmetauschers 8. An der Primärseite des zweiten Wärmetauschers 8 ist im Verlauf des Stranges des resultierenden Rücklaufes R RL des Heizungsrücklaufes RL 2 und des Verbraucherrücklaufs RL 1 ein weiterer Verteilpunkt 12 gegeben. Dieser Verteilpunkt 12 dient zur Weiterleitung des Heizmediums als Vorlauf an den primärseitigen Eingang des zweiten Wärmetauschers 8. Der Verlauf des resultierenden Rücklaufes R RL des Heizungsrücklaufes RL 2 und des Verbraucherrücklaufs RL 1 parallel zum zweiten Wärmetauscher 8 ist ein Lastentkopplungsbypass 17 mit einem Rückschlagventil 11 vor der Mischstelle 15 mit dem Rücklauf des primärseitigen Ausganges des zweiten Wärmetauschers 8. Der Lastentkopplungsbypass 17 ist so dimensioniert, dass er den gesamten Rücklaufstrom, ausgehend vom Rücklauf des Heizungskreislauf RL 2 und des Verbraucherrücklaufs RL 1, aufnehmen und durchleiten kann. Damit lässt sich der zweite Wärmetauscher 8 als Vorwärmer so dimensionieren, dass er bedarfsgerecht das Trinkwasser vorwärmen kann, aber nicht regelmäßig den Rücklaufstrom durchleiten muss. Der Rücklauf an der Primärseite des Wärmetauschers 8 ist über eine Pumpe 10 hin zu einem Mischpunkt 15 geleitet. Dieser Mischpunkt 15 setzt sich aus der eben dargestellten Zuführung aus der Pumpe 10 und den Ausgang des Rückschlagventils 11 in dem Strang des resultierenden Rücklaufes R RL des Heizungsrücklaufes RL 2 und des Verbraucherrücklaufs RL 1. Über den Mischpunkt 15 wird das Medium hin zu dem Einspeisungsrücklauf RL 0 geführt.

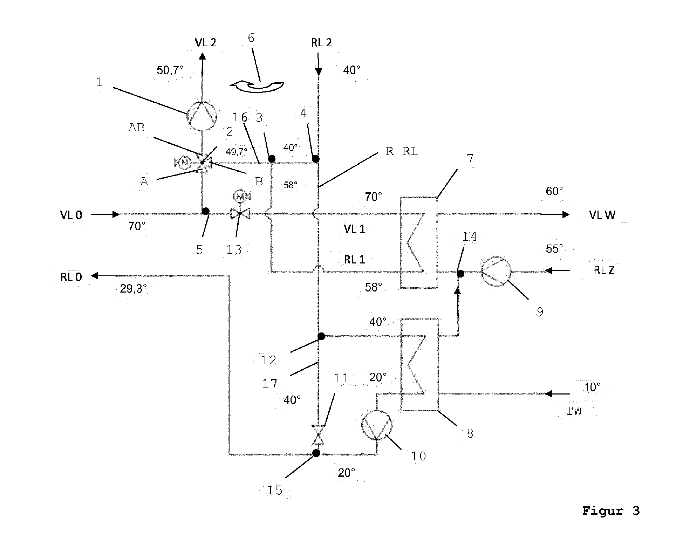

Die Figur 3 zeigt die schaltungstechnische Darstellung der erfinderischen Lösung mit den entsprechenden Temperaturangaben einer Fernwärmekompaktstation, wobei der Einspeisungsvorlauf VL 0 und der Einspeisungsrücklauf RL 0 an ein Fernwärmenetz geschaltet sind. Dabei beläuft sich die Temperatur des Einspeisungvorlaufes VL 0 auf 70 °C. Über den Verteilpunkt 5 werden nun ein Heizkreislauf 6 und die Zuführung über ein Durchlassventil 13 hin zum Verbrauchervorlauf VL 1 des ersten Wärmetauschers 7 schaltungstechnisch ausgeführt. An dem Verteilpunkt 5 ist eine Abzweigung hin zum Heizkreislauf 6 als Heizungsvorlauf VL 2 gegeben. Nach dem Verteilpunkt 5 ist ein Dreiwegemischer 2 vorhanden und nachfolgend eine Pumpe 1 zur Förderung des Mediums. Die Temperatur nach dem Dreiwegemischer 2 liegt bei 50,7 °C Eingangstemperatur über den Heizungsvorlauf VL 2 in den Heizkreislauf 6. An den Heizungsvorlauf VL 2 sind entsprechende Heizungsanlagen angeschlossen. Bei dem berechneten Beispiel handelt es sich um 48 Wohneinheiten bei einer Außentemperatur von 0 °C.

Aus dem Heizkreislauf 6 kommt ein Rücklauf des Heizungskreislaufes RL 2 mit einer Temperatur von 40 °C. Es ist ein Verteilpunkt 4 gegeben, welcher über den Zirkulationsbypass in einer Medienverbindung mit dem Zugang B des Dreiwegemischers 2 im Heizungsvorlauf VL 2 steht. Es wird eine Verteilung des Mediums in dem Rücklauf des Heizungskreislaufes RL 2 über den Verteilpunkt 4 durchgeführt. In der Medienverbindung zwischen dem Verteilpunkt 4 und dem Zugang B des Dreiwegemischers 2 ist ein Mischpunkt 3 vorhanden. An diesem Mischpunkt 3 ist der Verbraucherrücklauf RL 1 angeschlossen. Die Temperatur des beinhalteten Mediums beläuft sich auf ca. 58 °C. Über den Mischpunkt 3 werden die jeweiligen Medien gemischt, und es entsteht eine Temperatur des Mediums von 49,7 °C am Zugang B des Dreiwegemischers 2.

Der Verbraucherrücklauf RL 1 findet primärseitig von einem ersten Wärmetauscher 7 statt und weist eine Temperatur von 58 °C auf. Ebenfalls an der Primärseite ist der Verbrauchervorlauf VL 1 mit 70 °C anliegend. An der Sekundärseite des ersten Wärmetauschers 7 ist ein Medium von 60 °C im Warmwasserbereitungsvorlauf VL W gegeben. Wichtig ist dabei, dass diese Temperatur von 60 °C im Warmwasserbereitungsvorlauf VL W konstant gehalten wird.

Für die Nutzung der Warmwasserbereitung durch die jeweiligen Verbraucher ist eine Zirkulationsleitung hin zum ersten Wärmetauscher 7 über einen Zirkulationsrücklauf RL Z mit einer zwischengeschalteten Pumpe 9 vorhanden. Die Eingangstemperatur am Zirkulationsrücklauf RL Z beläuft sich auf ca. 55 °C. Der erste Wärmetauscher 7 dient als Nachwärmer für die Warmwasserbereitung. In Reihe dazu ist ein weiterer, zweiter Wärmetauscher 8 geschaltet. An der Sekundärseite wird Trinkwasser TW mit einer Temperatur von 10 °C eingespeist. Der Ausgang der Sekundärseite des zweiten Wärmetauschers 8 wird zum Mischpunkt 14 vor dem Eintritt des Zirkulationsrücklaufes RL Z über die Pumpe 9 in den Wärmetauscher 7 hergestellt. Über den ersten Wärmetauscher 8 als Vorwärmer wird das eingespeiste Trinkwasser TW mit 10 °C über den Wärmetauschprozess im zweiten Wärmetauscher 8 vorgewärmt und über den Mischpunkt 14 hin zum ersten Wärmetauscher 7 als Eingangsgröße sekundärseitig zugeführt. An der Primärseite des zweiten Wärmetauschers 8 ist ein Vorlauf mit einer Temperatur von ca. 40 °C gegeben. Dieser Vorlauf wird realisiert über einen Verteilpunkt 12, welcher aus der Zuführung des Mediums des gemeinsamen Rücklaufes des Heizungskreislaufes RL 2 und des Verbraucherrücklaufs RL 1 resultiert. Der gemeinsame Rücklauf R RL des Heizungsrücklaufes RL 2 und des Verbraucherrücklaufs RL 1 mit dem beinhalteten Medium wird über den Verteilpunkt 12 weitergeführt über ein Rückschlagventil 11 hin zu einem Mischpunkt 15. In diesem Mischpunkt 15 fließt ein Medium hinzu, welches über den zweiten Wärmetauscher 8 primärseitig und einer Pumpe 10 eingeleitet wird. Dieses Medium hat eine Temperatur von ca. 20 °C. Es handelt sich dabei um den Rücklauf aus dem zweiten Wärmetauscher 8 hin zum Mischpunkt 15. Vom Mischpunkt 15 aus findet eine Zuführung in den Einspeisungsrücklauf RL 0 statt. In dem beschriebenen Temperaturbeispiel wird in dem Einspeisungsrücklauf RL 0 eine Temperatur von 29,3 °C erreicht.

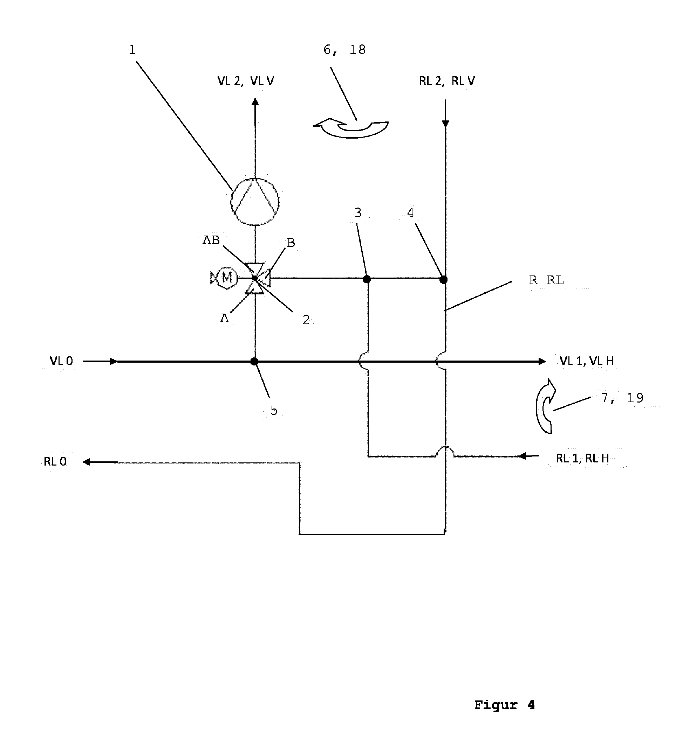

In Figur 4 ist dargestellt, dass der im Mischpunkt 3 eingespeiste Rücklauf der Verbraucherrücklauf RL 1 der Primärseite eines Wärmetauschers 7 oder der Heizungsrücklauf RL H zumindest eines Heizkreislaufes 19 ist. Zudem offenbart die Figur 4, dass der Mischpunkt 3 an einer Medienverbindung zwischen einem Verteilpunkt 4 des Heizungsrücklauf RL 2 des Heizkreislaufes 6 oder des Verbraucherrücklaufes RL V des Wärmetauschers 18 und einer Mischstelle 2 im Heizungsvorlauf VL 2 des Heizkreislaufes 6 oder im Verbrauchervorlauf VL V des Wärmetauschers 18 ist. Der resultierende Rücklauf R RL setzt sich je nach der Konfiguration bzw. nach dem Schaltungsaufbaus der Anordnung aber auch in Abhängigkeit des Betriebszustandes sowie Nutzung der jeweiligen Kreise oder Wärmetauscher aus dem Heizungsrücklauf RL 2, dem Heizungsrücklauf RL H, dem Verbraucherrücklauf RL 1 sowie dem Verbraucherrücklauf RL V zusammen.

### Bezugszeichen

1 - Pumpe
2 - Dreiwegemischer, Mischstelle
3 - Mischpunkt
4 - Verteilpunkt
5 - Verteilpunkt
6 - Heizkreislauf
7 - erster Wärmetauscher, Wärmetauscher der Warmwasserbereitung
8 - zweiter Wärmetauscher
9 - Pumpe
10 - Pumpe
11 - Einwegeventil, Rückschlagventil
12 - Verteilpunkt
13 - Durchlassventil
14 - Mischpunkt
15 - Mischpunkt
16 - Zirkulationsbypass
17 - Lastentkopplungsbypass
18 - Wärmetauscher
19 - Heizkreislauf

A - Zugang
B - Zugang
AB - Abgang

VL 0 - Einspeisungsvorlauf
RL 0 - Einspeisungsrücklauf
VL 1 - Verbrauchervorlauf
RL 1 - Verbraucherrücklauf
VL 2 - Heizungsvorlauf
RL 2 - Heizungsrücklauf, Rücklauf des Heizungskreislaufes
RL Z - Zirkulationsrücklauf
VL W - Warmwasserbereitungsvorlauf
VL V - Verbrauchervorlauf
RL V - Verbraucherrücklauf
VL H - Heizungsvorlauf
RL Z - Heizungsrücklauf
TW - Trinkwasserzuführung, Trinkwasser
R RL - resultierender Rücklauf

## Patentansprüche

1. Anordnung für eine Heizungs- und Warmwasserbereitungsanlage in Gebäuden mit einem Nah- oder Fernwärmeanschluss mit einem Einspeisungsvorlauf (VL 0) und einem Einspeisungsrücklauf (RL 0),
**dadurch gekennzeichnet,**
**dass** der Rücklauf der Primärseite zumindest eines Wärmetauschers (7) für eine Verbraucheranwendung als Verbraucherrücklauf (RL 1) oder der Heizungsrücklauf (RL H) zumindest eines Heizkreislaufes (19) in zumindest einen weiteren Heizkreislauf (6) oder an zumindest einen anderen Wärmetauscher (18) angeschlossen, eingebunden oder integriert ist und vom Heizkreislauf (6) oder Wärmetauscher (18) zumindest ein resultierender Rücklauf (R RL) zum Einspeisungsrücklauf (RL 0) vorhanden ist.

2. Anordnung nach Anspruch 1,
**dadurch gekennzeichnet,**
**dass** der Verbraucherrücklauf (RL 1) der Primärseite zumindest eines ersten Wärmetauschers (7) oder der Heizungsrücklauf (RL H) zumindest eines Heizkreislaufes (19) über einen Mischpunkt (3) an einer Medienverbindung zwischen einem Verteilpunkt (4) des Heizungsrücklauf (RL 2) des Heizkreislaufes (6) oder des Verbraucherrücklaufes (RL V) des Wärmetauschers (18) und einer Mischstelle (2) im Heizungsvorlauf (VL 2) des Heizkreislaufes (6) oder im Verbrauchervorlauf (VL V) des Wärmetauschers (18) angeschlossen ist.

3. Anordnung nach Anspruch 2,
**dadurch gekennzeichnet,**
**dass** die Medienverbindung ein Zirkulationsbypass (16) ist.

4. Anordnung nach einem der Ansprüche 2 und 3,
**dadurch gekennzeichnet,**
**dass** die Mischstelle (2) ein Dreiwegemischer (2) ist.

5. Anordnung nach einer der vorhergehenden Ansprüche,
**dadurch gekennzeichnet,**
**dass** der Heizungsrücklauf (RL 2), der Heizungsrücklauf (RL H), der Verbraucherrücklauf (RL 1) und/oder der Verbraucherrücklauf (RL V) den resultierenden Rücklauf (R RL) bilden.

6. Anordnung nach Anspruch 5,
**dadurch gekennzeichnet,**
**dass** der resultierende Rücklauf (R RL) des Heizungsrücklaufes (RL 2), des Heizungsrücklaufes (RL H), des Verbraucherrücklaufes (RL 1) und/oder des Verbraucherrücklaufes (RL V) primärseitig zumindest teilweise über einen zweiten Wärmetauscher (8) geführt ist.

7. Anordnung nach Anspruch 6,
**dadurch gekennzeichnet,**
**dass** der zweite Wärmetauscher (8) ein Vorwärmer ist und sekundärseitig am Eingang einen Trinkwasseranschluss (TW) und sekundärseitig am Ausgang eine Verbindung zum Sekundärkreis des Wärmetauschers (7) und/oder Wärmetauscher (18) besitzt.

8. Anordnung nach einem der Ansprüche 5 bis 7,
**dadurch gekennzeichnet,**
**dass** parallel zum zweiten Wärmetauscher (8) ein Lastentkopplungsbypass (17) vorhanden ist.

9. Anordnung nach einem der Ansprüche 5 bis 8,
**dadurch gekennzeichnet,**
**dass** im Lastentkopplungsbypass (17) ein Einwegeventil (11) oder ein Rückschlagventil (11) vorhanden ist.
